# EUROPÄISCHE PATENTSCHRIFT

(11) **EP 1 088 123 B1**
(45) Veröffentlichungstag und Bekanntmachung des Hinweises auf die Patenterteilung: **11.12.2002**
(21) Anmeldenummer: 99927837.7
(22) Anmeldetag: 02.06.1999
(51) Int. Cl.: D01D 10/00, A46B 3/06

(54) **VERFAHREN ZUM VERBINDEN, MARKIEREN UND STRUKTURELLEN VERÄNDERN VON MONOFILEN**
METHODS FOR CONNECTING, MARKING AND STRUCTURALLY MODIFYING MONOFILAMENTS
PROCEDE POUR RELIER, MARQUER ET MODIFIER STRUCTURALEMENT DES MONOPHILES

(30) Priorität: 16.06.1998 DE 19826414
(43) Veröffentlichungstag der Anmeldung: 04.04.2001
(73) Patentinhaber: CORONET-WERKE GmbH, 69483 Wald-Michelbach (DE)
(72) Erfinder: WEIHRAUCH, Georg, D-69483 Wald-Michelbach (DE)
(74) Vertreter: Dipl.-Ing. Heiner Lichti Dipl.-Phys. Dr.rer.nat. Jost Lempert Dipl.-Ing. Hartmut Lasch
(86) Internationale Anmeldenummer: EP9903807
(87) Internationale Veröffentlichungsnummer: WO99066111

(56) Entgegenhaltungen:
- DE-A- 4 334 751
- DE-A- 19 606 416
- US-A- 4 441 227

## Beschreibung

Die Erfindung betrifft ein Verfahren zum Verbinden von extrudierten Kunststoff-Monofilen an ihren Mantelflächen, wobei die Monofile nach dem Extrudieren verstreckt und anschließend stabilisiert werden. Ferner ist die Erfindung auf ein Verfahren zum Markieren und/oder strukturellen Verändern solcher Monofile oder einzelner solcher Monofile eines Monofil-Verbundes gerichtet.

Monofile werden aus annähernd beliebigen Polymeren durch Extrudieren hergestellt. Die Extrusion erfolgt mit Querschnitten, die dem späteren Verwendungszweck des Monofils angepaßt ist. So lassen sich extrem dünne Fasern, Borsten und Stränge herstellen. Unter "Monofile" werden alle endlos extrudierten Monofile mit Durchmessern verstanden, die von Fasern bis zu Borsten für industrielle Zwecke reichen, auch wenn nachfolgend überwiegend, aber nur beispielhaft, von Borsten die Rede ist.

In vielen Fällen besteht Bedarf an Borstenmaterial aus Monofilen mit unterschiedlichen Eigenschaften. Die Bereitstellung von Borsten aus zwei oder mehr Monofilen ist bisher daran gescheitert, daß mehradrige Borsten durch Kleben oder Überziehen in nicht ausreichendem Maße und nur unter Verlust ihrer Eigenschaften verbunden werden konnten. Mehradrige gedrillte Borsten haben sich bei Benutzung zumindest an den Enden in unerwünschter Weise wieder vereinzelt. Stoffschlüssige oder formschlüssige Verbindungen mehrerer zunächst individuell extrudierter Monofiladern gibt es bisher nicht.

Jedoch gerade für aus Monofiladern verschiedener Art gebildete Borsten besteht besonderer Bedarf. Die Kombination von Monofiladern z.B. aus harten Thermoplasten und weichen Elastomeren bringt neue Wirkungen. Entsprechendes gilt für die Kombination von Monofiladern mit abrasiver und mit nichtabrasiver Wirkung. Kombinierte Borstenwirkungen ergeben sich insbesondere auch durch die Kombination von Monofiladern unterschiedlichen Querschnitts wie beispielsweise die Verbindung von runden mit vieleckigen oder in anderer Weise profilierten Monofiladern. In vielen Fällen lassen sich die Wirkungen steigern, wenn um eine oder mehrere axial angeordnete Monofiladern andere Monofiladern weit- oder engmaschig spiralig oder sich kreuzend gewunden werden. Statt des Umwindens können auch andere Umgarnungsverfahren eingesetzt werden.

Der Erfindung liegt deshalb zunächst die Aufgabe zugrunde, Monofile aus gegebenenfalls unterschiedlichen Polymeren während oder nach dem Extrudieren miteinander zu einem Monofil-Verbund zu verbinden.

Diese Aufgabe wird erfindungsgemäß dadurch gelöst, daß Monofile mit unterschiedlichen Absorptionskoeffizienten für Laser (LS)-Strahlen eingesetzt, an ihrer Mantelfläche zumindest bereichsweise in Kontakt gebracht und durch Einbringen von Laserstrahlen in den Kontaktbereich miteinander verschmolzen oder formschlüssig miteinander verbunden werden, das Einbringen der Laserstrahlen vor dem Verstrecken und/oder nach dem Verstrecken und/oder nach dem Stabilisieren erfolgt.

Als Laserquelle kommen beispielsweise CO₂-Laser, DiodenLaser, Neodym-Laser oder auch Excimer-Laser in Frage. Mit solchen Lasern läßt sich aufgrund der Parallelstrahligkeit der Wellen und gegebenenfalls unter Zuhilfenahme von Masken oder Ablenk-Scannern sehr genau lokalisieren. Weisen die Monofile unterschiedliche Absorptionskoeffizienten, sei es als Materialeigenschaft oder als Zugabe von Additiven auf, können die Monofile im Kontaktbereich miteinander verschmolzen werden, wobei dies auch nur lokal geschehen kann. Mittels Laserstrahlen läßt sich ferner die im Absorptionsbereich zugeführte Wärme und damit das Schmelzvolumen sehr genau steuern, so daß auch bei einer kleinen Kontaktfläche sichergestellt ist, daß ein Verschmelzen bzw. Verschweißen im gesamten Kontaktbereich erfolgt.

Wenn ein Verschmelzen der Materialien der Monofile nicht möglich ist, da beispielsweise eines der Monofile nicht aus einem thermoplastischen Material besteht, kann eine formschlüssige Verbindung erzielt werden. Das Material der aus einem thermoplastischen Werkstoff bestehenden Monofile schmilzt infolge der Einbringung der Laserstrahlen auf, expandiert und fließt derart, daß das nicht oder weniger ausgeprägt schmelzende anliegende Monofil eingebunden wird, insbesondere wenn dieses Monofil keine glatte Oberfläche aufweist.

Es ist zwar bekannt (US-A-4 441 227), aus Monofilen durch Ablängen erhaltene Borsten zu Paketen zusammenzufassen, das Borstenpaket in dichter Packung in einen Rahmen, der Teil eines Bürstengriffs ist, einzusetzen und anschließend in die an der Rückseite der Bürste freiliegenden Enden der Borsten Laserstrahlen einzukoppeln. Dadurch werden die Borsten an ihren Mantelflächen miteinander und die peripher angeordneten Borsten mit dem Rahmen verbunden. Hierbei handelt es sich also um ein Verfahren zum Befestigen von fertigen Borsten an einem Borstenträger. Auch soweit die Borsten an ihren Mantelflächen verbunden werden, dient dies ausschließlich dem Zweck einen Verbund herzustellen und diesen am Borstenträger zu befestigen. Die Eigenschaften und Einsetzmöglichkeiten der Borsten selbst wird dadurch in keiner Weise beeinflußt: Gleiches gilt für ein anderes bekanntes Verfahren (DE-A-196 06 416), bei dem die Borsten freistehend mit dem Borstenträger verbunden werden, in dem die Laserstrahlen in die freien Enden der Borsten, die beispielsweise LS-durchlässig sind, eingekoppelt und mit ihrem gegenüberliegenden Ende mit dem Borstenträger verschweißt werden.

Die Monofile können nach dem Extrudieren unmittelbar in Kontakt miteinander gebracht werden, beispielsweise in paralleler Lage zu mehradrigen Strängen. Die Monofile können aber auch zwei- oder mehradrig oder auch konzentrisch koextrudiert werden. In diesem Falle findet durch die Laserbehandlung die innige Verbindung über die einander berührenden Mantelflächen statt. Gemäß einer Verfahrensvariante kann insbesondere vorgesehen sein, daß die Monofile nach dem Einbringen der Laserstrahlen stabilisiert werden. Wenn die Einbringung der Laserstrahlen im Produktionsprozeß der Monofile erst nach dem Stabilisieren der Monofile vorgesehen ist, wird somit ein zusätzlicher Stabilisierungsschritt durchgeführt.

Wie bereits angedeutet, können die Monofile aus Polymeren mit unterschiedlichen LS-Absorptionskoeffizienten eingesetzt werden und wird die LS-Absorption in der Grenzfläche zur Wärmbebildung ausgenutzt.

Vorzugsweise jedoch ist wenigstens eines von zwei miteinander zu verbindenden Monofilen mit Additiven mit einem höheren LS-Absorptionskoeffizient als das umgebende Polymer versetzt. Dabei kann es sich um Titandioxid, Ruß und um Metalle oder Metalloxide, insbesondere in Form von Farbpigmenten handeln. In diesem Fall wird das Polymer in der unmittelbaren Umgebung des Additivs aufgeschmolzen. Der Schmelzvorgang ist bei manchen Polymeren und Additiven mit einem Mikroschäumvorgang verknüpft, der in vielen Anwendungsfällen erwünscht ist, da er beispielsweise für einen besseren Stoffschluß sorgt und einen Formschluß begünstigt.

Das Verfahren kann auch so ausgeführt werden, daß Monofile mit Additiven überwiegend im mantelnahen Bereich eingesetzt werden, so daß sich der Schmelzprozeß im wesentlichen auf den Grenzflächenbereich der Monofile beschränkt.

Die Monofile können im wesentlichen in Parallellage miteinander verbunden werden, doch kann auch vorgesehen sein, daß wenigstens ein Monofil mit einem weiteren Monofil umwickelt wird und dieses im Kontaktbereich mit dem innen liegenden Monofil verbunden wird.

Der Erfindung liegt weiterhin die Aufgabe zugrunde, ein Verfahren zum optischen Markieren von extrudierten Monofilen oder einzelnen Monofilen eines Monofilverbundes vorzuschlagen, die nach dem Extrudieren verstreckt und anschließend stabilisiert werden.

Diese Aufgabe wird erfindungsgemäß dadurch gelöst, daß wenigstens das (die) zu markierende(n) Monofil(e) unter Zugabe von Additiven, die unter Lasereinwirkung mit einem Farbumschlag reagieren, extrudiert und in den der gewünschten Markierung entsprechenden Bereichen mit Laserstrahlen behandelt wird (werden), wobei die Behandlung mit Laserstrahlen nach dem Verstrecken und/oder nach dem Stabilisieren erfolgt. Dabei können die Additive unterschiedliche Absorptionseigenschaften für Laserstrahlen aufweisen.

Die Erfindung gibt die Möglichkeit, ein einzelnes Monofil oder einzelne Monofile innerhalb eines Verbundes in herkömmlicher Weise zu extrudieren und nachträglich in der jeweils gewünschten Weise zu markieren, indem der unter Lasereinwirkung eintretende Farbumschlag bei entsprechend ausgewählten Additiven genutzt wird. Dadurch lassen sich insbesondere Markierungen als Ordnungsmittel anbringen, um beispielsweise aus einem Borstenvorrat in bestimmter Weise markierte Borsten für eine bestimmte Borstenware zusammenzutragen. Ferner kann mit einer solchen Markierung eine bestimmte Verwendungsform signalisiert und wiederum als Ordnungsmittel benutzt werden. Es läßt sich aber auch insbesondere an einer fertigen Bürste eine solche Markierung als Verbrauchsanzeige nutzen. Dies ist beispielsweise bei Zahnbürsten, aber auch bei technischen Bürsten erwünscht, um einen rechtzeitigen Austausch der Bürste selbst oder der Borsten zu gewährleisten.

Je nach Aufgabe der Markierung kann das zu markierende Monofil punkt- oder linienförmig entlang seines Mantels mit Laserstrahlen behandeln. Stattdessen kann das zu markierende Monofil auch in wenigstens einer Radialebene mit Laserstrahl behandelt werden, so daß bei Abnutzung einer Borste die markierte Radialebene freigelegt wird und den notwendigen Austausch signalisiert.

Dabei kann insbesondere vorgesehen sein, daß die Monofile nach der Behandlung mit Laserstrahlen stabilisiert werden.

Es ist zwar bekannt (DE-A-43 34 751), Bauteile aus Kunststoff, insbesondere für Laborgeräte, mittels Laserstrahlen zu beschriften, doch handelt es sich hierbei um relativ große Spritzgußteile, deren Beschriftung im Endstadium der Fertigung erfolgt, während beim erfindungsgemäßen Verfahren Monofile mit einem Durchmesser markiert werden, der von Bruchteilen eines Millimeters bis zu wenigen Millimetern reicht, und die Markierung entweder für die weitere Verarbeitung (Sortieren) oder die Markierung mehrerer Monofile bei der späteren Verwendung (Verbrauchsanzeige) genutzt wird.

Bei konzentrisch koextrudierten Monofilen aus zwei oder mehr Komponenten ist es möglich, eine oder mehrere der inneren Monofil-Lagen mit LS-absorbierenden Additiven zu versehen. Geschieht dies nur in vorgegebenen Längenabschnitten und wird ein solches Monofil mit Laserstrahlen behandelt, tritt der Farbumschlag nur auf diesem Längenabschnitt ein. Auch dadurch läßt sich eine Skala oder Verbrauchsanzeige verwirklichen.

Schließlich liegt der Erfindung die Aufgabe zugrunde, Monofile oder einzelne Monofile eines Monofil-Verbundes, die nach dem Extrudieren verstreckt und anschließend stabilisiert werden, strukturell zu verändern. Unter struktureller Veränderung werden dabei vornehmlich Veränderungen der Oberfläche und/oder der inneren Struktur verstanden.

Zur Lösung dieser Aufgabe wird (werden) das (die) strukturell zu ändernde(n) Monofil(e) mit LS-absorbierenden Additiven extrudiert und vor dem Verstrecken und/oder nach dem Verstrecken und/oder nach dem Stabilisieren mit Laserstrahlen behandelt.

Bei erfindungsgemäß behandelten Monofilen bilden sich in den Additiven und/oder in unmittelbarer Umgebung der von der Laserstrahlung getroffenen Additive Mikroschaumstrukturen aus, die zur Oberflächenstrukturierung oder auch zur Strukturierung des Kerns des Monofils dienen können, um die Weichheit, das Flüssigkeitsaufnahmevermögen etc. zu beeinflussen. Dieser Schäumprozeß läßt sich insbesondere lokal begrenzen durch entsprechende Additivbemessung oder mehrkomponentige Monofilstrukturen sowie die Tiefenwirkung der Laserstrahlen. Die Mikroschaumbildung kann ferner genutzt werden, um beispielsweise bei koextrudierten Monofilen das innere oder äußere Monofil aufzublähen und dadurch die Veränderung der Struktur in nur einem der beiden Monofile zu nutzen oder aber den Verbund der Monofile zu verbessern. Dabei kann insbesondere vorgesehen sein, daß die Monofile nach dem Einbringen der Laserstrahlen stabilisiert werden.

Bei parallellagig koextrudierten Monofilen mit gegebenenfalls verschiedenen Querschnittsformen kann durch die LS-Absorption in nur einem Monofil dessen thermische Dehnung zur Änderung der Monofilform genutzt werden.

Durch Zugabe von Additiven, die LS unterschiedlich absorbieren oder durch Zugabe von LS-absorbierenden Additiven in unterschiedlicher Konzentration in den einzelnen Monofilen lassen sich die vorgenannten Eigenschaften weiterhin günstig beeinflussen und steuern.

Erfindungsgemäß ist weiterhin vorgesehen, daß beim Extrudieren LS-absorbierende Additive zugesetzt werden, die zugleich eine weitere technische Funktion bei der Verwendung des Monofils erfüllen. Stattdessen können Additive mit einer solchen technischen Funktion zusätzlich zu LS-absorbierenden Additiven zugegeben werden.

Bei diesen Additiven mit zusätzlicher technischer Funktion kann es sich um Schleifkörper aus unterschiedlichen Werkstoffen handeln, die beim üblichen Extrudieren häufig eine mangelhafte Einbindung im Polymer besitzen und durch die nachträgliche Laserbehandlung mit lokalem Schmelzvorgang im Bereich der Schleifkörper eine festere Einbindung erfahren.

Es können jedoch auch solche Körper zugesetzt werden, die sich aufgrund der nachträglichen Laserbehandlung verflüssigen oder vergasen.

## Patentansprüche

1. Verfahren zum Verbinden von extrudierten Kunststoff-Monofilen an ihren Mantelflächen, die nach dem Extrudieren verstreckt und anschließend stabilisiert werden, **dadurch gekennzeichnet, daß** Monofile mit unterschiedlichen Absorptionskoeffizienten für Laser (LS)-Strahlen eingesetzt, an ihren Mantelflächen zumindest bereichsweise in Kontakt gebracht und durch Einbringen von Laserstrahlen in den Kontaktbereich miteinander verschmolzen oder formschlüssig verbunden werden, wobei das Einbringen der Laserstrahlen vor dem Verstrecken und/oder nach dem Verstrecken und/oder nach dem Stabilisieren erfolgt.

2. Verfahren nach Anspruch 1, **dadurch gekennzeichnet, daß** die Monofile zwei- oder mehradrig oder konzentrisch koextrudiert werden.

3. Verfahren nach Anspruch 1 oder 2, **dadurch gekennzeichnet, daß** die Monofile nach dem Einbringen der Laser strahlen stabilisiert werden.

4. Verfahren nach einem der Ansprüche 1 bis 3, **dadurch gekennzeichnet, daß** Monofile aus Polymeren mit unterschiedlichen LS-Absorptionskoeffizienten eingesetzt werden.

5. Verfahren nach einem der Ansprüche 1 bis 4, **dadurch gekennzeichnet, daß** wenigstens eines der miteinander zu verbindenden Monofile Additive mit einem höheren LS-Absorptionskoeffizienten als das die Additive umgebende Polymer aufweist.

6. Verfahren nach Anspruch 5, **dadurch gekennzeichnet, daß** Monofile mit Additiven überwiegend im mantelnahen Bereich eingesetzt werden.

7. Verfahren nach Anspruch 5 oder 6, **dadurch gekennzeichnet, daß** als Additive ein oder mehrere Farbpigmente eingesetzt werden.

8. Verfahren nach einem der Ansprüche 1 bis 7, **dadurch gekennzeichnet, daß** die Monofile im wesentlichen in Parallellage miteinander verbunden werden.

9. Verfahren nach einem der Ansprüche 1 bis 7, **dadurch gekennzeichnet, daß** wenigstens ein Monofil mit einem weiteren Monofil umwickelt wird und dieses im Kontaktbereicht mit dem innen liegenden Monofil verbunden wird.

10. Verfahren zum optischen Markieren von extrudierten Monofilen oder einzelnen Monofilen eines Monofil-Verbundes, wobei die Monofile nach dem Extrudieren verstreckt und anschließend stabilisiert werden, **dadurch gekennzeichnet, daß** wenigstens das (die) zu markierende(n) Monofil(e) unter Zugabe von Additiven, die unter Lasereinwirkung mit einem Farbumschlag reagieren, extrudiert und in den der gewünschten Markierung entsprechenden Bereichen mit Laserstrahlen behandelt wird (werden), wobei die Behandlung mit Laserstrahlen vor dem Verstrecken und/oder nach dem Verstrecken und/oder nach dem Stabilisieren erfolgt.

11. Verfahren nach Anspruch 10, **dadurch gekennzeichnet, daß** die Additive unterschiedliche Absorptionskoeffizienten für Laserstrahlen aufweisen.

12. Verfahren nach Anspruch 10 oder 11, **dadurch gekennzeichnet, daß** das zu markierende Monofil punkt- oder linienförmig entlang seines Mantels mit Laserstrahlen behandelt wird.

13. Verfahren nach Anspruch 10 oder 11, **dadurch gekennzeichnet, daß** das Monofil in wenigstens einer Radialebene mit Laserstrahlen behandelt wird.

14. Verfahren nach Anspruch 10 oder 11, **dadurch gekennzeichnet, daß** die Monofile nach der Behandlung mit Laserstrahlen stabilisiert werden.

15. Verfahren nach einem der Ansprüche 10 bis 14, **dadurch gekennzeichnet, daß** bei konzentrisch aus zwei oder mehr Komponenten koextrudierten Monofilen nur eine oder mehrere der inneren Monofil-Lagen oder Bestandteile davon mit LS-absorbierenden Additiven versehen werden.

16. Verfahren nach Anspruch 15, **dadurch gekennzeichnet, daß** die eine oder mehreren inneren Monofil-Lagen nur in vorgegebenen Längenabschnitten mit Laserstrahlen behandelt werden.

17. Verfahren zur strukturellen Veränderung von extrudierten Monofilen oder einzelnen Monofilen eines Monofilverbundes, die nach dem Extrudieren verstreckt und anschließend stabilisiert werden, **dadurch gekennzeichnet, daß** das (die) strukturell zu verändernde(n) Monofil(e) mit LS-absorbierenden Additiven extrudiert und anschließend mit Laserstrahlen behandelt wird, wobei die Behandlung mit Laserstrahlen vor dem Verstrecken und/oder nach dem Verstrecken und/oder nach dem Stabilisieren erfolgt.

18. Verfahren nach Anspruch 17, **dadurch gekennzeichnet, daß** zwei oder mehr Monofile eines Verbundes von Monofilen mit LS unterschiedlich absorbierenden Additiven oder mit LS absorbierenden Additiven in unterschiedlicher Konzentration extrudiert werden.

19. Verfahren nach Anspruch 17 oder 18, **dadurch gekennzeichnet, daß** beim Extrudieren LS-absorbierende Additive zugesetzt werden, die zugleich eine weitere technische Funktion bei der Verwendung des Monofils erfüllen.

20. Verfahren nach Anspruch 17 oder 18, **dadurch gekennzeichnet, daß** beim Extrudieren neben den LS-absorbierenden Additiven Additive mit einer weiteren gebrauchstechnischen Funktion bei der Verwendung des Monofils zugesetzt werden.

21. Verfahren nach einem der Ansprüche 17 bis 20, **dadurch gekennzeichnet, daß** die Monofile nach der Behandlung mit Laserstrahlen stabilisiert werden.

## Claims

1. Method for joining extruded plastic monofilaments at the circumferential surfaces thereof which are stretched following extrusion and subsequently stabilized, **characterized in that** use is made of monofilaments with different absorption coefficients for laser beams (LS), are at least zonally contacted at their circumferential surfaces and are melted together or joined in positively engaging manner by introducing laser beams in the contact area, wherein the laser beams are introduced prior to stretching and/or following stretching and/or following stabilization.

2. Method according to claim 1, **characterized in that** the monofilaments are co-extruded in two-core, multicore or concentric form.

3. Method according to one of the claims 1 or 2, **characterized in that** the monofilaments are stabilized after introducing the laser beams.

4. Method according to one of the claims 1 to 3, **characterized in that** use is made of monofilaments from polymers with different LS absorption coefficients.

5. Method according to one of the claims 1 to 4, **characterized in that** at least one of the monofilaments to be joined together has additives with a higher LS absorption coefficient than the additive-surrounding polymer.

6. Method according to claim 5, **characterized in that** monofilaments with additives are mainly used in the area close to the sheath.

7. Method according to claim 5 or 6, **characterized in that** one or more pigments are used as additives.

8. Method according to one of the claims 1 to 7, **characterized in that** monofilaments are substantially joined together in the parallel position.

9. Method according to one of the claims 1 to 7, **characterized in that** at least one monofilament is entwined with a further monofilament and joined in the contact area to the inner monofilament.

10. Method for the optical marking of extruded monofilaments or individual monofilaments of a monofilament union, wherein the monofilaments are stretched following extrusion and subsequently stabilized, **characterized in that** at least the monofilament or monofilaments to be marked, accompanied by the addition of additives reacting under laser action with a color change, is extruded and in the areas corresponding to the desired marking undergoes treatment with the laser beams, wherein the laser beam treatment is carried out prior to stretching and/or following stretching and/or following stabilization.

11. Method according to claim 10, **characterized in that** the additives have different absorption coefficients for laser beams,

12. Method according to claim 10 or 11, **characterized in that** the monofilament to be marked is treated in punctiform or linear manner along its sheath with laser beams.

13. Method according to claim 10 or 11, **characterized in that** the monofilament is treated with laser beams in at least one radial plane.

14. Method according to claim 10 or 11, **characterized in that** the monofilaments are stabilized after treatment with laser beams.

15. Method according to one of the claims 10 to 14, **characterized in that** in the case of monofilaments concentrically co-extruded from two or more components, only one or several of the inner monofilament layers or constituents thereof are provided with LS-absorbing additives.

16. Method according to claim 15, **characterized in that** the one or more inner monofilament layers are only treated with laser beams in predetermined length portions.

17. Method for the structural modification of monofilaments or individual monofilaments of a monofilament union which are stretched and subsequently stabilized, **characterized in that** the monofilament or monofilaments to be structurally modified are extruded with LS-absorbing additives and then treated with laser beams, wherein the laser beam treatment is carried out prior to stretching and/or following stretching and/or following stabilization.

18. Method according to claim 17, **characterized in that** two or more monofilaments of a union of monofilaments are extruded with additives differently absorbing LS or with LS-absorbing additives in different concentrations.

19. Method according to claim 17 or 18, **characterized in that** LS-absorbing additives are added during extrusion and simultaneously fulfil a further technical function during monofilament use.

20. Method according to claim 17 or 18, **characterized in that**, on extrusion, apart from the LS-absorbing additives, addition takes place of additives with a further technical application function during monofilament use.

21. Method according to one of the claims 17 to 20, **characterized in that** the monofilaments are stabilized after treatment with laser beams.

## Revendications

1. Procédé pour relier des monofils en matière synthétique extrudée par leurs surfaces enveloppes, qui sont étirés après extrusion et ensuite stabilisés, **caractérisé en ce que** l'on utilise des monofils ayant des coefficients d'absorption aux rayons laser différents, on les met en contact au moins par zones au niveau de leurs surfaces enveloppes et on les soude entre eux ou on les relie à ajustement de forme en introduisant des rayons laser sur la zone de contact, l'introduction des rayons laser se passant avant l'étirage et/ou après l'étirage et/ou après la stabilisation.

2. Procédé selon la revendication 1, **caractérisé en ce que** les monofils sont co-extrudés à deux ou plusieurs brins ou de manière concentrique.

3. Procédé selon la revendication 1 ou 2, **caractérisé en ce que** les monofils sont stabilisés après introduction des rayons laser.

4. Procédé selon l'une quelconque des revendications 1 à 3, **caractérisé en ce que** l'on utilise des monofils réalisés dans des polymères à coefficients d'absorption aux rayons laser différents.

5. Procédé selon l'une quelconque des revendications 1 à 4, **caractérisé en ce que** l'un au moins des monofils à relier présente des additifs ayant un coefficient d'absorption aux rayons laser supérieur à celui du polymère entourant les additifs.

6. Procédé selon la revendication 5, **caractérisé en ce que** l'on utilise des monofils comportant des additifs principalement dans la zone proche de l'enveloppe.

7. Procédé selon la revendication 5 ou 6, **caractérisé en ce que** l'on utilise comme additifs un ou plusieurs pigments de couleur.

8. Procédé selon l'une quelconque des revendications 1 à 7, **caractérisé en ce que** les monofils sont reliés en position sensiblement parallèles les uns aux autres.

9. Procédé selon l'une quelconque des revendications 1 à 7, **caractérisé en ce que** l'on entoure au moins un monofil d'un autre monofil et que celui-ci est relié dans la zone de contact au monofil situé à l'intérieur.

10. Procédé de marquage optique de monofils extrudés ou de monofils individuels d'un faisceau de monofils, dans lequel les monofils sont étirés après extrusion et ensuite stabilisés, **caractérisé en ce qu'**au moins le(s) monofil(s) à marquer est (sont) extrudé(s) avec ajout d'additifs réagissant par un changement de couleur sous l'effet laser, qu'il(s) est (sont) soumis à l'effet de rayons laser dans les zones correspondant au marquage souhaité, le traitement aux rayons laser étant effectué avant l'étirage et/ou après l'étirage et/ou après la stabilisation.

11. Procédé selon la revendication 10, **caractérisé en ce que** les additifs présentent des coefficients d'absorption aux rayons laser différents.

12. Procédé selon la revendication 10 ou 11, **caractérisé en ce que** le monofil à marquer est traité aux rayons laser ponctuellement ou linéairement le long de son enveloppe.

13. Procédé selon la revendication 10 ou 11, **caractérisé en ce que** le monofil est traité aux rayons laser au moins dans un plan radial.

14. Procédé selon la revendication 10 ou 11, **caractérisé en ce que** les monofils son stabilisés après leur traitement aux rayons laser.

15. Procédé selon l'une quelconque des revendications 10 à 14, **caractérisé en ce que** dans le cas de monofils coextrudés concentriquement à partir de deux composants ou davantage, une seulement ou plusieurs des couches internes de monofils ou des parties d'entre elles sont munies d'additifs absorbant les rayons laser.

16. Procédé selon la revendication 15, **caractérisé en ce que** la ou les plusieurs couches internes de monofils ne sont traitées aux rayons laser que sur des portions longitudinales prédéfinies.

17. Procédé de modification structurelle de monofils extrudés ou de monofils individuels d'un faisceau de monofils, étirés après extrusion et ensuite stabilisés, **caractérisé en ce que** le(s) monofil(s) à modifier structurellement est (sont) extrudé(s) avec des additifs absorbant les rayons laser et ensuite traité(s) aux rayons laser, le traitement aux rayons laser étant effectué avant l'étirage et/ou après l'étirage et/ou après la stabilisation.

18. Procédé selon la revendication 17, **caractérisé en ce que** deux ou plusieurs monofils d'un faisceau de monofils sont extrudés avec des additifs absorbant différemment les rayons laser ou avec des additifs absorbant les rayons laser en concentration différente.

19. Procédé selon la revendication 17 ou 18, **caractérisé en ce que** lors de l'extrusion on ajoute des additifs absorbant les rayons laser, remplissant simultanément une autre fonction technique lors de l'utilisation du monofil.

20. Procédé selon la revendication 17 ou 18, **caractérisé en ce que** lors de l'extrusion on ajoute, en-dehors des additifs absorbant les rayons laser, des additifs ayant une autre fonction technique d'usage lors de l'usage du monofil.

21. Procédé selon l'une quelconque des revendications 17 à 20, **caractérisé en ce que** les monofils sont stabilisés après leur traitement aux rayons laser.
